# EUROPÄISCHE PATENTSCHRIFT

(11) **EP 2 491 641 B1**
(45) Veröffentlichungstag und Bekanntmachung des Hinweises auf die Patenterteilung: **24.06.2015**
(21) Anmeldenummer: 10745600.6
(22) Anmeldetag: 20.08.2010
(51) Int. Cl.: H02K 5/124

(54) **ELEKTRISCHE MASCHINE, HYDRAULIKEINHEIT**
ELECTRIC MACHINE, HYDRAULICS UNIT
MOTEUR ÉLECTRIQUE, UNITÉ HYDRAULIQUE

(30) Priorität: 19.10.2009 DE 102009045797
(43) Veröffentlichungstag der Anmeldung: 29.08.2012
(73) Patentinhaber: Robert Bosch GmbH, 70442 Stuttgart (DE)
(72) Erfinder: ISEL, Alain-Bernard, F-67160 Riedseltz (FR)
(86) Internationale Anmeldenummer: PCT/EP2010/062187
(87) Internationale Veröffentlichungsnummer: WO 2011/047903

(56) Entgegenhaltungen:
- DE-A1- 3 722 988
- DE-A1- 19 805 101
- DE-A1- 19 927 454
- US-A- 3 932 070
- US-A- 5 105 685

## Beschreibung

Die Erfindung betrifft eine elektrische Maschine mit wenigstens einer Rotorwelle, die in einem Gehäuse mittels wenigstens eines Wälzkörperlagers drehbar gelagert ist, wobei auf der Rotorwelle mindestens ein Kommutator drehfest angeordnet ist.

Ferner betrifft die Erfindung eine Hydraulikeinheit, insbesondere für ein Kraftfahrzeug, die ein Gehäuse und eine elektrische Maschine aufweist.

### Stand der Technik

Elektrische Maschinen sowie Hydraulikeinheiten der hier angesprochenen Art sind aus dem Stand der Technik bekannt. Elektrische Maschinen, die einen mechanisch arbeitenden Kommutator aufweisen und in Anwendungen genutzt werden sollen, bei denen Flüssigkeit in das Gehäuse der elektrischen Maschine gelangen kann, haben den Nachteil, dass die Flüssigkeit durch das die Rotorwelle stützende beziehungsweise lagernde Wälzkörperlager strömen beziehungsweise aufgrund von Kapillareffekten hindurchgedrängt/-gefördert werden kann. In der Regel sind Wälzkörperlager zur Reibungsminimierung und gegebenenfalls auch zur Kühlung mit Schmiermittel versehen. Zwar ist es bekannt, die Dichtheit derartiger Wälzkörperlager mittels entsprechender Dichtscheiben zu erhöhen, jedoch kann auch hier ein Leckspalt nicht vermieden werden, da die zwei Ringe des Wälzkörperlagers auch weiterhin zueinander relativ verdreht werden können müssen. Durchläufe die Flüssigkeit einmal das Wälzkörperlager (in axialer Richtung gesehen), so nimmt es Schmiermittel mit und führt dieses aus dem Wälzkörperlager hinaus. Es findet ein sogenanntes Auswaschen des Wälzkörperlagers statt. Bei elektrischen Maschinen kann dies dazu führen, dass das aus dem Wälzkörperlager herausgewaschene Schmiermittel auf den Kommutator gelangt und dessen Funktion beeinträchtigt. Dieser Vorgang ist auch unter dem Begriff Verpassten bekannt.

Aus der Offenlegungsschrift US 5,105,685 A ist eine elektrische Maschine mit den Merkmalen des Oberbegriffs des Anspruchs 1 bekannt. Diese weist eine Rotorwelle auf, die in einem Gehäuse drehbar gelagert ist und einen Kommutator trägt, wobei auf der dem Kommutator gegenüber liegenden Seite eines Wälzkörperlagers eine Schleuderscheibe auf der Rotorwelle angeordnet ist. Auch die Offenlegungsschriften DE 1.99 27 454 A1 und US 3,932,070 A offenbaren entsprechende elektrische Maschinen.

### Offenbarung der Erfindung

Die erfindungsgemäße elektrische Maschine gewährleistet auf einfache Art und Weise eine hohe Lebensdauer durch das Verhindern einer Verpasstung des Kommutators. Dazu weist die elektrische Maschine die Merkmale des geltenden Anspruchs 1 auf. Erfindungsgemäß ist auf der dem Kommutator gegenüberliegenden Seite des Wälzkörperlagers eine Schleuderscheibe drehfest auf der Rotorwelle angeordnet. Im Betrieb sorgt die Schleuderscheibe dafür, dass Flüssigkeit, die durch das Wälzkörperlager in Richtung des Kommutators gelangen könnte, durch die Rotation der Rotorwelle, und damit mit der Rotation der Schleuderscheibe, nach außen, also letztendlich von kritischen Bereichen des Wälzkörperlagers weg geschleudert wird. Die Schleuderscheibe ist dazu zumindest im Wesentlichen senkrecht auf beziehungsweise zu der Rotorwelle ausgerichtet und bevorzugt nahe zu dem Wälzkörperlager angeordnet. Erfindungsgemäß weist die Schleuderscheibe zumindest bereichsweise ein ringförmiges Wellenprofil auf, wobei die ringförmigen Wellen des Wellenprofils zweckmäßigerweise koaxial zur Drehachse der Schleuderscheibe beziehungsweise zu der Rotorwelle liegen und sich somit jeweils über den Umfang der Schleuderscheibe erstrecken. Hierdurch erhält die Schteuderscheibe eine gewissen Flexibilität, und ein Verschleudern von Flüssigkeit kann in mehreren Radial-Bereichen erfolgen, da letztendlich durch die Wellenstruktur mehrere Schrägen gebildet werden Insbesondere wird die oben beschriebene Schräge im äußeren Umfangsbereich durch die Wellenstruktur mitgebildet.

Zweckmäßigerweise ist der maximale Durchmesser der Schleuderscheibe mindestens so groß wie der Innendurchmesser eines Außenrings des Wäizkörperlagers. Dadurch erstreckt sich die Schleuderscheibe radial gesehen von dem Innendurchmesser des Wälzlagerinnenrings bis mindestens zu dem Innendurchmesser des Wälzlageraußenrings, sodass die Schleuderscheibe zumindest den Schmiermittel enthaltenen Bereich des Wälzkörperlagers überdeckt. Umso näher die Schleuderscheibedabei an dem Wälzkörperlager angeordnet ist, umso höher ist die Schutzwirkung.

Weiterhin ist vorgesehen, dass die Schleuderscheibe zumindest in ihrem äußeren Umfangsbereich eine sich über den gesamten Umfang erstreckende Schräge aufweist. Mit dieser Schräge kann Flüssigkeit gezielt von dem Wälzkörperlager weg geschleudert beziehungsweise gefördert werden. Zweckmäßigerweise weist dazu die Schräge von dem Wälzkörperlager weg, sodass ein Auswaschen des Wälzkörperlagers und letztendlich ein Verpassten des Kommutators sicher verhindert wird.

Bevorzugt weist die Schräge einen Winkel von 15° bis 70°, insbesondere von 25° bis 60° zu der Schleuderscheibe auf. Das bedeutet, dass der die Schräge aufweisende Umfangsbereich der Schleuderscheibe zumindest eine Oberfläche aufweist, die in einem Winkel von 15° bis 70°, insbesondere 25° bis 60° zu der ansonsten zumindest im Wesentlichen senkrecht zu der Rotorwelle ausgerichteten Schleuderscheibe beziehungsweise gedachten Schleuderscheiberiebene liegt. Die Schräge kann dabei geradlinig oder auch gekrümmt verlaufen.

In einer bevorzugten Ausgestaltung der elektrischen Maschine ist vorgesehen, dass der Umfangsbereich zum Bilden der Schräge umgebogen ist. Die Schleuderscheibe ist somit an ihrem äußeren Umfangsbereich derart umgebogen, dass sie die sich über den gesamten Umfang erstreckende Schräge bildet. Dabei kann die umgebogene Form bereits beim Urformen der Schleuderscheibe vorgegeben werden, oder auch erst bei einem anschließenden Umformvorgang. Die Wahl der Herstellung des umgebogenen Randbereichs hängt im Wesentlichen dabei von dem Material der Schleuderscheibe ab. Das Bilden der Schräge durch den umgebogenen Randbereich hat den Vorteil, dass Materialkosten sowie Gewicht gespart werden.

Weiterhin ist vorgesehen, dass der maximale Durchmesser der Schleuderscheibe kleiner ist als der Innendurchmesser des Gehäuses im Bereich der Schleuderscheibe. Hierdurch wird ein radialer Luftspalt zwischen der Schleuderscheibe und dem Gehäuse der elektrischen Maschine gewährleistet. Zweckmäßigerweise weist der Luftspalt eine Breite von 0,5 bis 3 mm, insbesondere von 1,0 bis 2,0 mm auf. Hierdurch wird der Schleuderscheibe bei hohen Drehzahlen zum einen die Möglichkeit gegeben, sich nach außen auszudehnen, was beispielsweise durch die Flexibilität der Wellenstruktur gewährleistet wird, ohne dass ein Reibkontakt zwischen der Schleuderscheibe und dem Gehäuse entsteht.

Ferner ist vorgesehen, dass auf der Rotorwelle vorteilhafterweise wenigstens ein Exzenterlager auf der dem Kommutator abgewandten Seite des Wälzkörperlagers angeordnet ist. Das Exzenterlager dient hierbei insbesondere zum Ausgleich von Massekräften der Rotorwelle. Insbesondere hier stellt sich die Schleuderscheibe als vorteilhaft dar, da das Exzenterlager durch seine Exzentrizität dazu führen kann, dass die Flüssigkeit in Richtung des Kugellagers gedrängt wird.

Zweckmäßigerweise ist die Schleuderscheibe dabei zwischen dem Exzenterlager und dem Wälzkörperlager axial gehalten beziehungsweise gelagert. Besonders bevorzugt ist die Schleuderscheibe zwischen dem Exzenterlager und dem Wälzkörperlager eingeklemmt beziehungsweise verspannt gehalten. Wobei die Vorspannung insbesondere aufgrund der Wellenstruktur auf einfache Art und Weise realisierbar ist.

Die erfindungsgemäße Hydraulikeinheit zeichnet sich durch eine elektrische Maschine aus, wie sie oben beschrieben wurde. Bei Hydraulikeinheiten, insbesondere von Bremssystemen von Kraftfahrzeugen, wie beispielsweise bei ABS-Einrichtungen (ABS=Antiblockiersystem) oder auch bei ESP-Einrichtungen (ESP=Elektronische Stabilitätskontrolle), sind Flüssigkeiten in unmittelbarer Umgebung der elektrischen Maschine, die beispielsweise zum Aufbau von Flüssigkeitsdruck in einem Hydraulikkreislauf der Hydraulikeinheit dient. Die vorteilhafte Ausbildung der elektrischen Maschine mit der Schleuderscheibe ermöglicht hier einen dauerhaften Betrieb der elektrischen Maschine, indem sie das Verpassten des Kommutators wirksam verhindert.

Im Folgenden soll die Erfindung anhand der Zeichnung näher erläutert werden. Dazu zeigen
- Figur 1: eine elektrische Maschine in einer vereinfachten Schnittdarstellung und
- Figur 2: eine Schleuderscheibe der elektrischen Maschine in einer perspektivischen Darstellung.

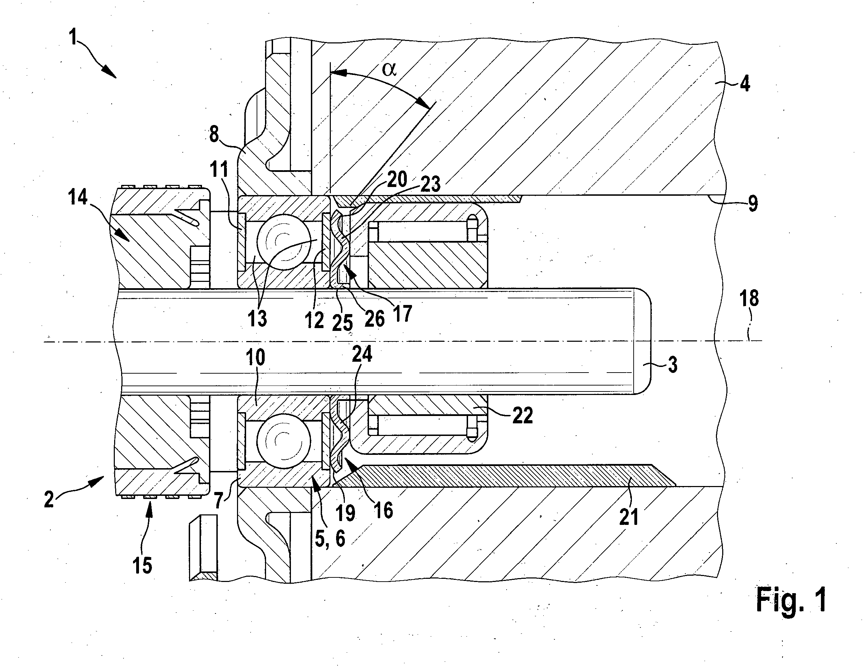

Die Figur 1 zeigt einen Ausschnitt einer Hydraulikeinheit 1 in einer vereinfachten Schnittdarstellung. Die Hydraulikeinheit 1 umfasst eine elektrische Maschine 2, deren Rotorwelle 3 in einem Gehäuse 4 gelagert ist. Das Gehäuse 4 ist somit sowohl Bestandteil der Hydraulikeinheit 1 als auch der elektrischen Maschine 2. Zur Lagerung der Rotorwelle 3 ist ein Wälzkörperlager 5, das vorliegend als Kugellager 6 ausgebildet ist, vorgesehen. Das Wälzkörperlager 5 wird radial an seinem Außenring 7 im Wesentlichen von einem Lagerdeckel 8 gehalten, und ragt bereichsweise in eine Aufnahme 9 des Gehäuses 4 ein. Das Wälzkörperlager 5 weist weiterhin einen Innenring 10 auf, der drehfest auf der Rotorwelle 3 angeordnet ist. Zwischen dem Außenring 7 und dem Innenring 10 sind Wälzkörper, vorliegend in Form von Kugeln, in entsprechenden Rillen geführt. An seinen axialen Stirnseiten ist das Wälzkörperlager 5 mittels Dichtringen 11,12 verschlossen, wobei die Dichtringe 11,12 jeweils an dem Außenring 7 oder dem Innenring 10 befestigt sind und an dem entsprechend anderen Ring 10,7 des Wälzkörperlagers 5 nur anliegen, sodass eine Relativbewegung zwischen dem Außenring 7 und dem Innenring 10 möglich ist. Der Innenraum 13 des Wälzkörperlagers 5 ist zweckmäßigerweise zumindest bereichsweise mit einem Schmiermittel gefüllt. Im einfachsten Fall handelt es sich bei dem Schmiermittel um Schmierfett.

Auf der Rotorwelle 3 der elektrischen Maschine 2 ist weiterhin in der Darstellung gemäß Figur 1 links von dem Wälzkörperlager 5 ein Kommutator 14 drehfest angeordnet. An seiner Mantelaußenfläche weist der Kommutator 14 Kommutator-Lamellen 15 auf, die mit hier nicht dargestellten Kommutator-Bürsten der elektrischen Maschine 2 zusammenwirken.

In der Darstellung rechts von dem Wälzkörperlager 5, also auf der dem Kommutator 14 gegenüberliegenden Seite des Wälzkörperlagers 5, ist auf der Rotorwelle 3 weiterhin eine Schleuderscheibe 16 drehfest angeordnet. Der Außendurchmesser der Schleuderscheibe 16 ist dabei derart gewählt, dass ein Luftspalt zwischen der Umfangsfläche der Schleuderscheibe 16 und der Innenseite der Aufnahme 9 besteht. Vorzugsweise ist der Luftspalt nicht größer als 0,5 bis 3,0 mm, bevorzugt 1,00 bis 2,00 mm. Vorliegend weist die Schleuderscheibe 16 ein Wellenprofil 17 auf, wobei die Wellen des Wellenprofils 17 koaxial zu der Rotorwelle 3 beziehungsweise zur Drehachse 18 der Rotorwelle 3 ausgerichtet sind und sich jeweils über den gesamten Umfang der Schleuderscheibe 16 erstrecken.

Das Wellenprofil 17 bildet dabei in dem äußeren Umfangsbereich 19 der Schleuderscheibe 16 eine Schräge 20, die in einem Winkel α, der vorliegend circa 40° beträgt, zu der ansonsten im Wesentlichen senkrecht zur Rotorwelle 3 ausgerichteten Schleuderscheibe 16 ausgerichtet ist: Allgemein kann der Winkel 15° bis 70°, insbesondere 25° bis 60° betragen, um die im Folgenden beschriebene gewünschte Wirkung zu erzielen:

Durch das Vorsehen der elektrischen Maschine 2 in der Hydraulikeinheit 1 befindet sich die elektrische Maschine 2 in unmittelbarer Nähe zu einer Flüssigkeit 21, die beispielsweise mittels der Hydräulikeinheit 1 gefördert werden soll. Diese Flüssigkeit kann sich im Bereich der Lagerung, also im Bereich des Wälzkörperlagers 5, vorliegend in der Aufnahme 9, sammeln. Im Betrieb der elektrischen Maschine 2 wird die sich in Richtung des Wälzkörperlagers 5 bewegende Flüssigkeit 21, insbesondere wenn sie auf die Rotorwelle 3 gelangt, von der Schleuderscheibe 16 in dem Winkel α nach außen geschleudert. Durch den Winkel α weist die Schräge bevorzugt von dem Wälzkörperlager 5 weg, sodass die Flüssigkeit von dem Wälzkörperlager 5 weggeschleudert wird. Hierdurch wird auf besonders einfache Art und Weise gewährleistet, dass die Flüssigkeit nicht in das Wälzkörperlager 5 gelangen und Schmiermittel aus dem Innenraum 13 auswaschen kann, welches zum Verpassten des Kommutators 14 führen könnte. Somit wird auf einfache Art und Weise eine hohe Lebensdauer der elektrischen Maschine 2 und der Hydraulikeinheit 1 gewährleistet. Zweckmäßigerweise liegt die Schleuderscheibe 16 dabei axial an dem Innenring 10 des Wälzkörperlagers 5 an. Radial erstreckt sich die Schleuderscheibe 16 dabei bevorzugt von der Rotorwelle 3 bis über den Innendurchmesser des Außenrings 7 hinaus. Aufgrund des vorteilhaften Wellenprofils 17 kann ein Reibkontakt zwischen dem Außenring 7 und der Schleuderscheibe 16 vermieden werden.

In dem Ausführungsbeispiel gemäß der Figur 1 ist auf der Rotorwelle 3 weiterhin ein Exzenterlager 22 drehfest derart angeordnet, dass die Schleuderscheibe 16 axial zwischen dem Wälzkörperlager 5 und dem Exzenterlager 22 gelagert, vorzugsweise eingeklemmt beziehungsweise verspannt gelagert ist.

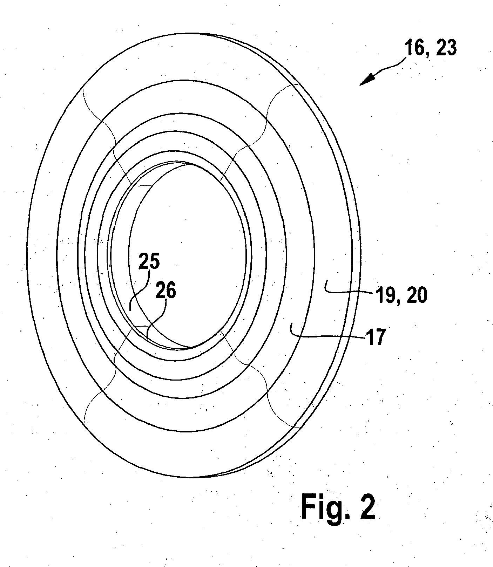

Die Figur 2 zeigt in einer perspektivischen Darstellung die Schleuderscheibe 16 aus der Figur 1. Vorliegend ist die Schleuderscheibe 16 als Tiefziehteil 23 ausgebildet. Die Schräge 20 wird dabei durch den äußeren, gebogenen Umfangsbereich 19 gebildet. Aufgrund des Wellenprofils 17.ist radial weiter innen liegend eine weitere Schräge 24 ausgebildet, die ebenfalls zum Verschleudern der Flüssigkeit 21 genutzt werden kann. An ihrer Rotorvvellenaufnahme 25 weist die Schleuderscheibe 16 einen kreiszylinderförmigen Abschnitt 26 auf, der eine sichere Ausrichtung sowie Anordnung der Schleuderscheibe 16 auf der Rotorwelle 3 gewährleistet. Vorteilhafterweise ist die Schleuderscheibe 16 aus einem stanzbaren Material, bevorzugt aus einem C60-Material gefertigt und weist bevorzugt eine chemische Nickel-Phosphor-Beschichtung auf. Die Beschichtung verhindert den Verschleiß der Schleuderscheibe 16 und erhöht ihre Härte bevorzugt derart, dass sie der Härte des Exzenterlagers 22 entspricht.

Dadurch, dass die Schleuderscheibe 16 auf der dem Kommutator 14 abgewandten Seite des Wälzkörperlagers 5 angeordnet ist, wird ein Auswaschen des Wälzkörperlagers 5 in Richtung des Kommutators 14 und damit ein Verpassten des Kommutators 14 wirksam und auf einfache Art und Weise verhindert.

## Patentansprüche

1. Elektrische Maschine (2) mit wenigstens einer Rotorwelle (3), die in einem Gehäuse (4) mittels wenigstens eines Wälzkörperlagers (5) drehbar gelagert ist, wnhei auf der Rotorwelle (3) mindestens ein Kommutator (14) drehfest angeordnet ist, wobei auf der dem Kommutator (14) gegenüberliegenien Seite des Wälzkörperlagers (5) eine Schleuderscheibe (16) drehfest auf der Rotorwelle (3) angeordnet ist, **dadurch gekennzeichnet, dass** die Schleuderscheibe (16) zumindest bereichsweise ein ringförmiges Wellenprofil (17) aufweist.

2. Elektrische Maschine nach Anspruch 1, **dadurch gekennzeichnet, dass** der maximal Durchmesser der Schleuderscheibe (16) mindestens so groß ist wie ein Innendurchmesser eines Außenrings (7) des Wälzkörperlagers (5).

3. Elektrische Maschine nach einem der vorhergehenden Ansprüche, **dadurch gekennzeichnet, dass** die Schleuderscheibe (16) zumindest in ihrem äußerten Umfangsbereich (19) eine sich über den gesamten Umfang erstreckende, insbesondere von dem Wälzkörperlager (5) wegweisende Schräge (20) aufweist.

4. Elektrische Maschine nach einem der vorhergehenden Ansprüche, **dadurch gekennzeichnet, dass** die Schräge (20) einen Winkel (α) von 15° bis 70°, insbesondere 25° bis 60° zu der Schleuderscheibe (16) aufweist.

5. Elektrische Maschine nach einem der vorhergehenden Ansprüche, **dadurch gekennzeichnet, dass** der Umfangsbereich (19) zum Bilden der Schräge (20) umgebogen ist.

6. Elektrische Maschine nach einem der vorhergehenden Ansprüche, **dadurch gekennzeichnet, dass** der maximale Durchmesser der Schleuderscheibe (16) kleiner ist als der Innendurchmesser des Gehäuses (4) im Bereich der Schleuderscheibe (16).

7. Elektrische Maschine nach einem der vorhergehenden Ansprüche, **dadurch gekennzeichnet, dass** auf der Rotorwelle (3) wenigstens ein Exzenterlager (22) auf der dem Kommutators (14) abgewandten Seite des Wälzkörperlagers (5) angeordnet ist.

8. Elektrische Maschine nach einem der vorhergehenden Ansprüche, **dadurch gekennzeichnet, dass** die Schleuderscheibe (16) zwischen dem Exzenterlager (22) und dem Wälzkörperlager (5) axial gehalten insbesondere verspannt gehalten ist.

9. Hydraulikeinheit (1), insbesondere für ein Kraftfahrzeug, die ein Gehäuse (4) und eine elektrische Maschine (2) aufweist, **gekennzeichnet durch** die Ausbildung der elektrischen Maschine (2) nach einem oder mehreren der vorhergehenden Ansprüche.

## Claims

1. Electrical machine (2) having at least one rotor shaft (3) which is borne by means of at least one rolling-body bearing (5) such that it can rotate in a housing (4), with at least one commutator (14) being arranged on the rotor shaft (3) such that they rotate together, wherein a centrifugal disk (16) is arranged on the rotor shaft (3) such that they rotate together, on the opposite side of the rolling-body bearing (5) to the commutator (14), **characterized in that** the centrifugal disk (16) has an annular corrugated profile (17), at least in places.

2. Electrical machine according to Claim 1, **characterized in that** the maximum diameter of the centrifugal disk (16) is at least as large as an internal diameter of an outer ring (7) of the rolling-body bearing (5).

3. Electrical machine according to one of the preceding claims, **characterized in that** the centrifugal disk (16) has an incline (20) which extends over the entire circumference and in particular faces away from the rolling-body bearing (5), at least in its outer circumferential area (19).

4. Electrical machine according to one of the preceding claims, **characterized in that** the incline (20) is at an angle (α) of 15° to 70°, in particular 25° to 60° to the centrifugal disk (16).

5. Electrical machine according to one of the preceding claims, **characterized in that** the circumferential area (19) is bent in order to form the incline (20).

6. Electrical machine according to one of the preceding claims, **characterized in that** the maximum diameter of the centrifugal disk (16) is less than the internal diameter of the housing (4) in the area of the centrifugal disk (16).

7. Electrical machine according to one of the preceding claims, **characterized in that** at least one eccentric bearing (22) is arranged on the rotor shaft (3), on the side of the rolling-body bearing (5) facing away from the commutator (14).

8. Electrical machine according to one of the preceding claims, **characterized in that** the centrifugal disk (16) is held, in particular held in a braced manner, axially between the eccentric bearing (22) and the rolling-body bearing (5).

9. Hydraulic unit (1), in particular for a motor vehicle, which has a housing (4) and an electrical machine (2), **characterized by** the electrical machine (2) being designed according to one or more of the preceding claims

## Revendications

1. Moteur électrique (2) comprenant au moins un arbre de rotor (3) qui est monté à rotation dans un boîtier (4) au moyen d'au moins un palier à corps de roulement (5), au moins un collecteur (14) étant disposé de manière solidaire en rotation sur l'arbre de rotor (3), un disque centrifuge (16) étant disposé de manière solidaire en rotation sur l'arbre de rotor (3) sur le côté du palier à corps de roulement (5) opposé au collecteur (14), **caractérisé en ce que** le disque centrifuge (16) comprend, au moins dans certaines régions, un profilé ondulé annulaire (17).

2. Moteur électrique selon la revendication 1, **caractérisé en ce que** le diamètre maximal du disque centrifuge (16) est au moins aussi grand qu'un diamètre intérieur d'une bague extérieure (7) du palier à corps de roulement (5).

3. Moteur électrique selon l'une quelconque des revendications précédentes, **caractérisé en ce que** le disque centrifuge (16) comprend, au moins dans sa région périphérique extérieure (19), un biseau (20) s'étendant sur toute la périphérie, en particulier opposé au palier à corps de roulement (5).

4. Moteur électrique selon l'une quelconque des revendications précédentes, **caractérisé en ce que** le biseau (20) présente un angle (α) de 15° à 70°, en particulier de 25° à 60° par rapport au disque centrifuge (16).

5. Moteur électrique selon l'une quelconque des revendications précédentes, **caractérisé en ce que** la région périphérique (19) est recourbée pour former le biseau (20).

6. Moteur électrique selon l'une quelconque des revendications précédentes, **caractérisé en ce que** le diamètre maximal du disque centrifuge (16) est inférieur au diamètre intérieur du boîtier (4) dans la région du disque centrifuge (16).

7. Moteur électrique selon l'une quelconque des revendications précédentes, **caractérisé en ce qu'**au moins un palier excentrique (22) est disposé sur l'arbre de rotor (3) sur le côté du palier à corps de roulement (5) opposé au collecteur (14).

8. Moteur électrique selon l'une quelconque des revendications précédentes, **caractérisé en ce que** le disque centrifuge (16) est retenu, en particulier retenu de manière serrée, axialement entre le palier excentrique (22) et le palier à corps de roulement (5).

9. Unité hydraulique (1), en particulier pour un véhicule automobile, laquelle comprend un boîtier (4) et un moteur électrique (2), **caractérisée en ce que** le moteur électrique (2) est conçu selon l'une quelconque ou plusieurs des revendications précédentes.
